(19) Europäisches Patentamt
European Patent Office
Office européen des brevets

(11) **EP 4 366 009 B1**

(12) **EUROPÄISCHE PATENTSCHRIFT**

(45) Veröffentlichungstag und Bekanntmachung des Hinweises auf die Patenterteilung:
**05.11.2025 Patentblatt 2025/45**

(21) Anmeldenummer: **23200466.3**

(22) Anmeldetag: **28.09.2023**

(51) Internationale Patentklassifikation (IPC):
*H01M 10/04* (2006.01)  *H01M 10/0583* (2010.01)
*H01M 6/46* (2006.01)

(52) Gemeinsame Patentklassifikation (CPC):
**G01N 23/04; G01B 11/022; G01B 15/00;**
**H01M 6/46; H01M 10/04; H01M 10/0585;**
G01N 2223/645

(54) **VERFAHREN ZUR PRÜFUNG MINDESTENS EINES BATTERIEELEMENTESTAPELS BEZÜGLICH DER LAGE VON BATTERIELEMENTSCHICHTEN**

METHOD FOR TESTING AT LEAST ONE STACK OF BATTERY ELEMENTS WITH RESPECT TO THE POSITION OF BATTERY ELEMENT LAYERS

PROCÉDÉ DE CONTRÔLE D'AU MOINS UN EMPILEMENT D'ÉLÉMENTS DE BATTERIE PAR RAPPORT À LA POSITION DE COUCHES D'ÉLÉMENTS DE BATTERIE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **04.11.2022  DE 102022211683**

(43) Veröffentlichungstag der Anmeldung:
**08.05.2024  Patentblatt 2024/19**

(73) Patentinhaber: **PowerCo SE**
**38239 Salzgitter (DE)**

(72) Erfinder: **Masuch, Steffen**
**38118 Braunschweig (DE)**

(74) Vertreter: **FDST Patentanwälte**
**Nordostpark 16**
**90411 Nürnberg (DE)**

(56) Entgegenhaltungen:
EP-A1- 4 044 306     DE-A1- 102020 112 814
JP-A- 2018 087 740

**Beschreibung**

Die Erfindung betrifft ein Verfahren zur Prüfung mindestens eines Stapels mehrerer Batterieelemente (Batterieelementestapel), die jeweils eine als Anode ausgestaltete Elektrode, eine als Kathode ausgestaltete Elektrode und mindestens einen Separator als unterschiedliche Arten von plattenförmigen Batterieelementschichten umfassen, wobei der Separator zwischen den Elektroden angeordnet ist und wobei die Batterieelementschichten polygone Großflächen mit zumindest teilweise unterschiedlichen Größen aufweisen und in einer Stapelrichtung, die senkrecht zu den Großflächen ausgerichtet ist, gestapelt sind. Ein solcher Batterieelementestapel, der auch als Elektroden-Separatoren-Verbund (ESV) bezeichnet wird, kann insbesondere als Bestandteil einer Batterie vorgesehen sein.

Bei der automatisierten Herstellung von Batterien werden die Batterieelementschichten mittels Stapelmaschinen zu Batterieelementestapeln gestapelt, wobei die Ablagegenauigkeit der Batterieelementschichten und insbesondere der Elektroden das Gütekriterium für die Prozessfähigkeit der Stapelmaschinen ist. Alle Kanten der polygonen und insbesondere rechteckigen Batterieelementschichten müssen einen definierten Abstand voneinander haben und in einem definierten Toleranzbereich liegen, um einerseits eine möglichst optimale elektrochemische Leistungsfähigkeit der Batterien zu gewährleisten und weiterhin, um einen Kurzschluss zwischen benachbarten Elektroden, von denen eine als Anode und die andere als Kathode der Batteriezelle dienen wird, infolge einer nicht ausreichend exakten Stapelung zu vermeiden. Ein solcher Kurzschluss könnte zu einem Ausfall der betroffenen Batterie führen.

Es kann vorgesehen sein, den Separator eines Batterieelementestapels derart größer als die Anode und die Anode wiederum größer als die Kathode zu dimensionieren, dass sich über dem gesamten Umfang ein Überstand von beispielsweise 1 Millimeter zwischen Separator und Anode bzw. Anode und Kathode ergibt, um unter Berücksichtigung der Ablagegenauigkeit aktuell genutzter Stapelmaschinen einen Kurzschluss zwischen benachbarten Elektroden infolge einer nicht ausreichend exakten Stapelung sicher zu vermeiden. Auch kann durch einen solchen Überstand eine verringerte chemische Leistungsfähigkeit der Batterieelementestapel infolge einer ungenauen Positionierung der Elektroden vermieden werden. Eine solche toleranzbedingte Überdimensionierung der Anoden und Separatoren erhöht jedoch den Materialverbrauch bei der Herstellung der Batterieelementestapel und damit die Kosten, den Raumbedarf und das Gewicht der Batterieelementestapel und damit der Batterien. Es kann daher sinnvoll sein, solche toleranzbedingten Überdimensionierungen von Batterieelementschichten in Batterieelementestapeln zu minimieren. Dazu sollte, um einen Kurzschluss zwischen benachbarten Elektroden infolge einer nicht ausreichend exakten Stapelung zu vermeiden, die Ablagegenauigkeit der für die Stapelung genutzten Stapelmaschinen erhöht und/oder die Qualitätssicherung im Rahmen der Herstellung der Batterieelementestapel verbessert werden, so dass eine Herstellung kurzgeschlossener Batterieelementestapel ausreichend sicher vermieden oder diese im Rahmen der Herstellung sicher aussortiert werden können.

Die DE 10 2009 018 079 A1 offenbart eine Prüfung einer Batterie, insbesondere bei einem bestimmten Betriebszustand, mittels elektromagnetischer Strahlung, beispielsweise Röntgenstrahlung, wobei auch die relative Ausrichtung der Anode und der Kathode mindestens einer Batteriezelle der Batterie überprüft werden kann.

Die DE 10 2020 112 814 A1 offenbart ein Verfahren zur Überprüfung von Batterien, wobei Bilder einer Vielzahl von gestapelten Batteriezellen unter Verwendung radioaktiver Strahlung, wie z.B. Röntgenstrahlung, erfasst werden.

Die EP 4 044 306 A1 offenbart ein Verfahren, bei dem die Ablage von Batterieelementen auf Batteriestapeln mittels optischer Kameras überprüft wird.

Die JP 2018 087740 A zeigt ein Verfahren, bei dem eine gewickelte Batteriezelle mittels Röntgenstrahlung überprüft wird.

Der Erfindung liegt die Aufgabe zugrunde, ein Verfahren zur Ermittlung der Ablagegenauigkeit der Batterieelementschichten eines Batterieelementstapels anzugeben, das bei ausreichender Genauigkeit möglichst einfach und/oder schnell durchführbar ist.

Diese Aufgabe ist bei einem Verfahren gemäß dem Patentanspruch 1 gelöst. Bevorzugte Ausführungsformen des erfindungsgemäßen Verfahrens sind Gegenstände der weiteren Patentansprüche und/oder ergeben sich aus der nachfolgenden Beschreibung der Erfindung.

Erfindungsgemäß ist ein Verfahren zur Prüfung mindestens eines Stapels mehrerer Batterieelemente, d.h. eines Batterieelementestapels vorgesehen, wobei die Batterieelemente jeweils eine als Anode ausgestaltete Elektrode, eine als Kathode ausgestaltete Elektrode und mindestens einen (die Anode und die Kathode separierenden und elektrisch isolierenden) Separator als unterschiedliche Arten von plattenförmigen (Batterieelementschichten umfassen, wobei der Separator zwischen den Elektroden angeordnet ist und wobei die Batterieelementschichten polygone und vorzugsweise rechteckige Großflächen mit zumindest teilweise unterschiedlichen Größen aufweisen und in einer Stapelrichtung, die senkrecht zu den Großflächen ausgerichtet ist, gestapelt sind. Die zwei Elektroden eines Batterieelements unterschieden sich hinsichtlich eines umfassten Aktivmaterials, wodurch die als Anode ausgestaltete Elektrode anodisch und die die als Kathode ausgestaltete Elektrode kathodisch wirksam ist (jeweils bezogen auf ein Entladen der Batteriezelle).

Als "plattenförmig" wird ein Körper oder ein Abschnitt eines Körpers (z.B. bei einem mäanderförmigen Verlauf eines Separatorbands, wobei die zwischen den angrenzenden Elektroden gelegenen Abschnitte davon plattenförmige Separatoren darstellen) verstanden, der zwei (außenseitige) Großflächen aufweist, die sich in einer Längsrichtung und einer Breitenrichtung des Körpers erstrecken, wobei eine (maximale) Höhe des Körpers, Die dem (maximalen) Abstand der Großflächen entspricht, kleiner (insbesondere höchstens 1/10 oder 1/100 oder 1/100) als die (maximale) Länge und als die (maximale) Breite ist.

In einem ersten Prüfschritt des Verfahrens wird die relative Lage der Batterieelementschichten der noch vereinzelten Batterieelemente ermittelt und dabei geprüft, ob Abstände von (einigen oder allen) Kanten der Batterieelementschichten jeweils innerhalb eines ersten Toleranzbereichs liegen, wobei die Batterieelemente, für die eine positive Prüfung erfolgt ist, d.h. die die Anforderung des ersten Prüfschritts erfüllen, als verwendbare Batterieelemente ermittelt werden.

Anschließend werden mehrere der verwendbaren Batterieelemente zu dem Batterieelementestapel gestapelt und in einem zweiten Prüfschritt wird der Batterieelementestapel mittels Röntgenstrahlung bestrahlt, die von einem Röntgenstrahler ausgestrahlt und von einem Röntgendetektor detektiert wird, wobei die Röntgenstrahlung (d.h. zumindest ein Strahl, insbesondere der Zentralstrahl davon) senkrecht bezüglich der Großflächen der Batterieelementschichten ausgerichtet ist. Dabei sollte der Batterieelementestapel relativ zu der Röntgenstrahlung bewegt werden. Mittels der detektierten Röntgenstrahlung werden dann die Lagen, vorzugsweise die Posen, der Kanten von (nur) einer Art der Batterieelementschichten, d.h. der Kathoden, der Separatoren oder, vorzugsweise, der Anoden ermittelt, wobei geprüft wird, ob jeweils der größte Abstand, der zwischen den entsprechenden Kanten aller Batterieelementschichten der ausgewählten Art vorliegt, innerhalb eines zweiten Toleranzbereichs liegt. Um dabei ein ausreichend sicheres und genaues Prüfungsergebnis zu erzielen, werden dabei zumindest diejenigen Kanten der betrachteten Art der Batterieelementschichten berücksichtigt, die mindestens zwei der Ecken (definiert als Übergang von zwei nicht koaxialen Geradseiten der Großfläche, der nicht spitz zulaufend sein muss) dieser Batterieelementschichten begrenzen. Diese zwei Ecken können insbesondere diagonal gegenüberliegende Ecken sein.

In dem ersten Prüfschritt werden folglich die einzelnen Batterieelemente bezüglich der Abstände der Kanten ihrer Batterieelementschichten überprüft werden und solche Batterieelemente, die die diesbezüglichen Qualitätskriterien erfüllen und daher für die Ausbildung des Batterieelementestapels genutzt werden, ausgewählt. Dadurch kann der zweite Prüfschritt, bei dem der Batterieelementestapel insgesamt überprüft wird, deutlich vereinfacht werden. Bei diesem können dann nämlich lediglich noch die Lagen, vorzugsweise die Posen, von Kanten einer Art der Batterieelementschichten, insbesondere der Anoden, ermittelt und hinsichtlich einer Anordnung innerhalb des zweiten Toleranzbereichs überprüft werden. Dies ermöglicht eine einfache und schnelle Überprüfung des Batterieelementestapels und damit insbesondere auch eine vorteilhafte Integration in einen automatisierten Herstellungsprozess für Batterien. Insbesondere wird durch die erfindungsgemäße Kombination der zwei Prüfschritte ermöglicht, den zweiten Prüfschritt in "Aufsicht" der Röntgenstrahlung, d.h. mit "Blick" des Röntgenstrahlers auf die Großflächen der Batterieelementschichten und besonders bevorzugt mit senkrechter Ausrichtung eines Zentralstrahls der Röntgenstrahlung bezüglich dieser Großflächen, durchzuführen, wodurch eine vorteilhafte Erfassung der Kanten von zumindest der betrachteten Art der Batterieelementschichten möglich ist.

Gemäß einer bevorzugten Ausführungsform eines erfindungsgemäßen Verfahrens kann vorgesehen sein, dass die Batterieelementschichten bereits bei der Durchführung des ersten Prüfschritts unbeweglich miteinander verbunden, insbesondere stoffschlüssig verbunden, beispielsweise verklebt beziehungsweise laminiert, sind. Dadurch kann gewährleistet werden, dass sich die in dem ersten Prüfschritt ermittelten Lagen der Batterieelementschichten der vereinzelten Batterieelemente bei dem sich anschließenden Stapeln und auch während des zweiten Prüfschritts nicht mehr ändern und daher die diesbezüglichen Prüfergebnisse bei der Auswertung im Rahmen des zweiten Prüfschritts fehlerfrei berücksichtigt werden können. Alternativ dazu kann jedoch ein Verändern der Lagen der Batterieelementschichten der Batterieelemente beim Stapeln und während des zweiten Prüfschritt durch andere Maßnahmen, beispielsweise eine temporär zur Fixierung der Batterieelementschichten verwendete Fixiervorrichtung, verhindert werden. Bei dem Stapeln sollte eine Deformation und insbesondere ein Knicken der Batterieelementschichten vermieden werden. Die bereits miteinander verbundenen Batterieelementschichten können sich diesbezüglich vorteilhaft auswirken.

Die im Rahmen eines erfindungsgemäßen Verfahrens genutzten Batterieelemente können vorzugsweise derart ausgestaltet sein, dass jeweils die Großflächen der Anode größer als die Großflächen der Kathoden und die Großflächen des mindestens einen Separators größer als die Großflächen der Kathode und vorzugsweise auch größer als die Großflächen der Anode ist. Durch die unterschiedlich große Ausgestaltung der Großflächen sollte jeweils ein allseitiger Überstand der relativ großen Batterieelementschichten (Separator und Anode) gegenüber der jeweils nächst kleineren Batterieelementschichten realisiert sein. Dadurch kann eine vorteilhafte Durchführung beider Prüfschritte ermöglicht werden, was auf den unterschiedlichen Absorptionsverhalten dieser verschiedenen Batterieelementschichten für sowohl sichtbares Licht als auch für Röntgenstrahlung beruhen kann. Diese unterschiedlichen Absorptionsverhalten können in den unterschiedlichen Materialien, aus denen die verschiedenen Batterieelementschichten ausgestaltet sind, begründet sein. Dabei kann das Absorptionsverhalten der Kathoden in beiden Fällen (d.h. bei sichtbarem Licht und bei Röntgenstrahlung) am höchsten und dasjenige der Separatoren in beiden Fällen am geringsten sein.

Bezüglich des ersten Prüfschritts kann demnach vorzugsweise vorgesehen sein, dass das Ermitteln der Lagen der Batterieelementschichten der vereinzelten Batterieelemente basierend auf dem Bild eines optischen Kamerasystems, d.h. mittels eines auf sichtbarem Licht basierenden, bilderzeugenden Systems, das eine oder mehrere Kameras umfasst, durchgeführt wird, was eine einfache und kostengünstige Durchführung des ersten Prüfschritt ermöglicht. Dabei kann die Bilderfassung einer Kamera des Kamerasystems vorzugsweise in Aufsicht, d.h. mit "Blick" auf die Großflächen der Batterieelementschichten und besonders bevorzugt mit senkrechter Ausrichtung der optischen Achse der Kamera des Kamerasystems bezüglich dieser Großflächen, aufgenommen werden. Dies kann sich ebenfalls vorteilhaft hinsichtlich der Durchführung des ersten Prüfschritts auswirken, weil dadurch ein möglichst großflächiger Abschnitt der Batterieelemente mit den zu erfassenden Kanten, vorzugsweise alle Kanten der Batterieelementschichten vollständig, erfasst werden kann. Durch das höchste Absorptionsverhalten für sichtbares Licht kann dabei die Kathode jedes vereinzelten Batterieelements auf dem Bild erkennbar sein, obwohl diese als kleinste der Batterieelementschichten gegebenenfalls vollständig von mindestens einer anderen der Batterieelementschichten überdeckt ist. Weiterhin können zumindest auch die Kanten der Anode auf dem Bild erkennbar sein. Dies gilt zumindest dann, wenn, wie es vorzugsweise vorgesehen ist, die Anode größer als die Kathode ist. Der mindestens eine Separator, der zwischen der Anode und der Kathode jeder der Batterieelemente angeordnet ist, ist vorzugsweise größer als zumindest die Kathode (und vorzugsweise auch größer als die Kathode), um eine ausreichende Separierung der Anode und der Kathode mit dem Ziel der elektrischen Isolation zu realisieren. Weiterhin kann der mindestens eine Separator dadurch ebenfalls vorteilhaft auf dem Bild des Kamerasystems erkennbar sein. Besonders vorteilhaft erkennbar ist der mindestens eine Separator, wenn dieser auch größer als die Anode ist, was sich zudem besonders vorteilhaft hinsichtlich der Separierung der Anode und der Kathode auswirken kann. Obwohl der mindestens eine Separator, je nach Ausrichtung des Batterieelements bezüglich der Kamera, die Anode oder die Kathode vollständig überdecken kann, kann das Absorptionsverhalten dieses Separators so gering sein, dass dies ein Ermitteln zumindest der Kanten der Anode oder der Kathode nicht verhindert. Dies gilt im Übrigen auch für einen oder mehrere zusätzliche Separatoren, die an der ansonsten frei liegenden Seite der Anode oder der Kathode angeordnet sein können. Eine Anordnung von Lichtquellen des Kamerasystems kann vorzugsweise derart sein, dass eine erste Lichtquelle auf derselben Seite bezüglich der vereinzelten Batterieelemente (und vorzugsweise an ungefähr derselben Stelle) wie die Kamera und eine zweite Lichtquelle auf der gegenüberliegenden Seite bezüglich der vereinzelten Batterieelemente angeordnet sind. Die Durchführung des ersten Prüfschritts kann demnach auf einer Kombination aus Auflicht- und Durchlichterfassung beruhen.

Ein besonders vorteilhaft auswertbares Bild kann im Rahmen des ersten Prüfschritts ermittelt werden, wenn die Großflächen des mindestens einen Separators größer als die Großflächen der Anode und die Großflächen der Anode größer als die Großflächen der Kathode sind, wobei das Bild des Kamerasystems in Aufsicht aufgenommen wird und bei der Aufnahme des Bildes die Kathode näher an der Kamera des Kamerasystems als die Anode liegt.

Vorzugsweise kann vorgesehen sein, dass in dem zweiten Prüfschritt die relativen Lagen der Kanten von (nur) den Anoden ermittelt werden, was insbesondere aufgrund des vorzugsweise vorgesehenen mittleren Absorptionsverhalten und der mittleren Größe der Großflächen der Anoden vorteilhaft sein kann.

Gemäß einer bevorzugten Ausführungsform eines erfindungsgemäßen Verfahrens kann vorgesehen sein, dass der zweite Toleranzbereich jeweils (d.h. der verschiedenen erfassten Kanten) ermittelt wird, indem ein (vor-)definierter Ausgangstoleranzbereich basierend auf einem in dem ersten Prüfschritt ermittelten Abstand der entsprechenden Kanten angepasst und insbesondere verkleinert wird. Dadurch können Abweichungen hinsichtlich der Lagen dieser Kanten, die während des ersten Prüfschritts ermittelt wurden, zur Anpassung des zweiten Toleranzbereichs herangezogen werden, womit ein besseres Prüfergebnis in dem zweiten Prüfschritt des erfindungsgemäßen Verfahrens realisiert werden kann.

Bei der Durchführung eines erfindungsgemäßen Verfahrens kann vorzugsweise ein Röntgendetektor verwendet werden, der mindestens (und vorzugsweise exakt) zwei Zeilendetektoren umfasst, die senkrecht zueinander ausgerichtet sind. Ein solcher Röntgendetektor ermöglicht in vorteilhafter Weise die hinsichtlich ihrer Lagen betrachteten Kanten zu erfassen, insbesondere auch durch eine rein translatorische Bewegung des Batterieelementestapels relativ zu dem Röntgendetektor. Dabei kann besonders bevorzugt vorgesehen sein, dass der Batterieelementestapel mindestens einmal in senkrechter Richtung durch einen zeilenförmigen Erfassungsbereich jedes der Zeilendetektoren relativbewegt wird. Dabei kann vorgesehen sein, dass, wie es vorzugsweise vorgesehen ist, ausschließlich der Batterieelementestapel oder ausschließlich der Röntgendetektor (und dann auch der Röntgenstrahler) oder der Batterieelementestapel und der Röntgendetektor (mit dem Röntgenstrahler) bewegt wird/werden.

Ein erfindungsgemäßes Verfahren ermöglicht vorteilhaft auch die gleichzeitige Prüfung von mehreren und insbesondere zwei Batterieelementestapeln gleichzeitig während des zweiten Prüfschritts, was insbesondere auf die vereinfachte Prüfung hinsichtlich der Lagen von nur einer Art der Batterieelementschichten und die dadurch ermöglichte relativ einfache und insbesondere rein translatorische Relativbewegung der Batterieelementestapel relativ zu der Röntgenstrahlung ermöglicht wird. Durch eine gleichzeitige Prüfung mehrerer Batterieelementestapel kann der Zeitaufwand, der für die Prüfung mehrerer Batterieelementestapel erforderlich ist, relativ gering gehalten werden.

Eine weitere Verbesserung der Genauigkeit bei der erfindungsgemäßen Prüfung des Batterieelementestapels lässt sich erzielen, wenn die mehreren verwendbaren Batterieelemente in einer nachvollzogenen, d.h. nach dem Stapeln bekannten Reihenfolge zu dem mindestens einen Batterieelementestapel gestapelt werden und der zweite Prüfschritt mindestens zweifach in unterschiedlichen Positionen des Batterieelementestapels relativ zu dem Röntgenstrahler durchgeführt wird und durch einen Vergleich der Ergebnisse dieser mindestens zwei zweiten Prüfschritte die ermittelten Lagen der Kanten den verschiedenen Batterieelementen zugeordnet werden. Damit kann insbesondere ermittelt werden, welche der Batterieelemente in dem Batterieelementstapel die größten Abstände der betrachteten Kanten aufweisen und an welcher Position beziehungsweise auf welcher Höhe diese innerhalb des Batterieelementestapels angeordnet sind.

Die Erfindung wird nachfolgend anhand eines in den Zeichnungen dargestellten Ausführungsbeispiels näher erläutert. In den Zeichnungen zeigt, jeweils in vereinfachter Darstellung:

Fig. 1:        einen Batterieelementestapel, verspannt in einem Werkstückträger;

Fig. 2:        einen Querschnitt durch einen Abschnitt des Batterieelementestapels und des Werkstückträgers;

Fig. 3:        Ablagebereiche für die Kathoden, Anoden und Separatoren des Batterieelementestapels;

Fig. 4:        ein vereinzeltes Batterieelement und ein Kamerasystem gemäß einer ersten Variante;

Fig. 5:        ein vereinzeltes Batterieelement und ein Kamerasystem gemäß einer zweiten Variante;

Fig. 6:        den Batterieelementestapel und ein Röntgensystem;

Fig. 7 bis 11:        verschiedene Stellungen des Batterieelementestapels relativ zu einem Röntgendetektor eines Röntgensystems gemäß einer ersten Variante;

Fig. 12 bis 16:        verschiedene Stellungen des Batterieelementestapels relativ zu Röntgendetektoren eines Röntgensystems gemäß einer zweiten Variante;

Fig. 17 bis 22:        verschiedene Stellungen mehrerer Batterieelementestapel relativ zu Röntgendetektoren eines Röntgensystems gemäß einer dritten Variante;

Fig. 23:        eine Darstellung zur Ermittlung eines (zweiten) Toleranzbereichs;

Fig. 24:        eine Darstellung zu Abweichungen der Lagen benachbarte Kanten einer Kathode und einer Anode eines Batterieelements; und

Fig 25:        geometrische Zusammenhänge bei der Ermittlung von räumlichen Lagen einer Kante mittels des Röntgensystems.

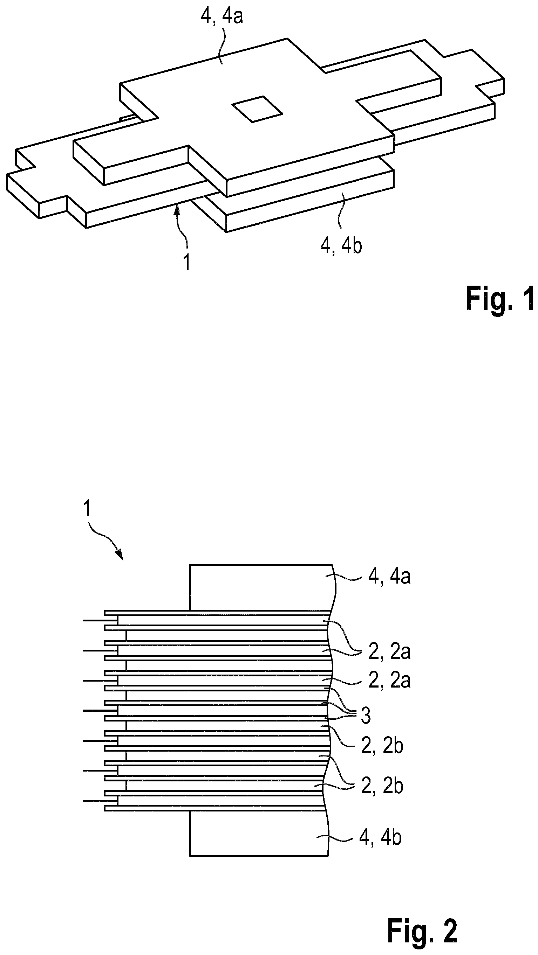

Im Rahmen einer Batteriezellenfertigung können Batterieelementestapel 1, die auch als Elektroden-Separator-Verbünde (ESVs) bezeichnet werden, gemäß der Fig. 2 hergestellt werden. Hierbei handelt es sich um Stapel 1 mehrerer Batterieelemente, die in abwechselnder Reihenfolge Batterieelementschichten in Form von plattenförmige Elektroden 2 (wiederum abwechselnd in Ausgestaltungen und Anordnungen, die vorgesehenen Verwendungen als Anoden 2a und Kathoden 2b der Batterieelemente entsprechen) und elektrisch isolierende, plattenförmige Separatoren 3, umfassen, wobei die Elektroden 2 und Separatoren 3 rechteckige Großflächen aufweisen. Vorgesehen ist, dass die Anoden 2a, die Kathoden 2b und die Separatoren 3 unterschiedlich große Großflächen aufweisen, um trotz Ungenauigkeiten bei der Stapelung, die zumindest noch innerhalb entsprechender Toleranzbereiche liegen, einen Kurzschluss zwischen benachbarten Anoden 2a und Kathoden 2b sowie zu große Verluste hinsichtlich der elektrischen Leistungsfähigkeit der Batterieelemente zu vermeiden. Gemäß der Fig. 2 kann vorgesehen sein, dass die Kathoden 2b die kleinsten Großflächen und die Separatoren 3 die größten Großflächen aufweisen, wodurch sich ein vollumfänglicher (d.h. sowohl bezüglich der Breiten als auch der Längen der Batterieelementschichten vorliegender) randseitiger Überstand einerseits der Anoden 2a bezüglich der Kathoden 2b und andererseits der Separatoren 3 bezüglich der Anoden 2a (und damit auch der Kathoden 2b) ergibt.

Die plattenförmigen Separatoren 3 können zumindest teilweise auch Abschnitte eines mäanderförmig geführten Separatorstreifens (nicht gezeigt) sein. Auch können die überstehenden Randbereiche benachbarter Separatoren 3 verklebt sein.

Nach einem Stapelprozess wird ein Batterieelementestapel 1 zwischen einem Deckel 4a und einem Boden 4b eines Werkstückträgers 4 fixiert (vgl. Fig. 1). In dem Boden 4b des Werkstückträgers 4 können zwei Zentrierbohrungen (nicht sichtbar) vorgesehen sein, die für eine reproduzierbare Positionierung des Werkstückträgers 4 während des Stapelprozesses sowie während einer Bestrahlung der Batterieelementestapel 1 mit Röntgenstrahlung, die einer Prüfung hinsichtlich einer ausreichend genauen Stapelung der Batterieelementschichten 1 dient, im Rahmen eines erfindungsgemäßen Verfahrens genutzt werden. Die abgebildete Geometrie des Werkstückträgers 4 kann abweichen. Für den Werkstückträger 4 sollte ein Material eingesetzt werden, das eine Prüfung mittels der Röntgenstrahlung nicht verhindert und vorzugsweise auch nicht in einem Wesentlichen Maße behindert oder beeinflusst.

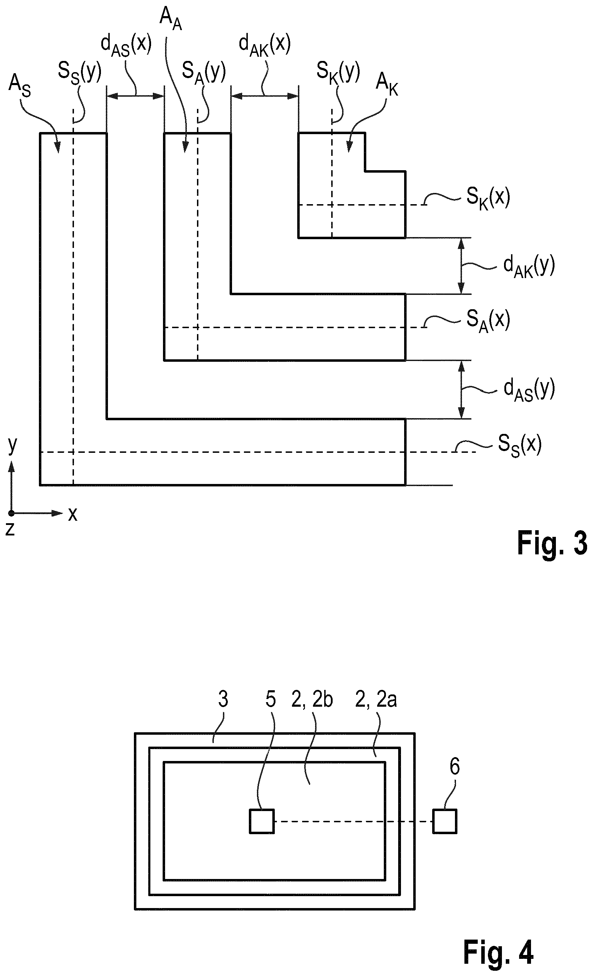

Die Fig. 3 zeigt mögliche Vorgaben für eine ausreichend genaue Stapelung der Batterieelemente beziehungsweise der diese ausbildenden Elektroden 2 und Separatoren 3 für eine der insgesamt vier Ecken des Batterieelementestapels, wobei diese Vorgaben für alle Ecken erfüllt sein sollten. Demnach kann jeweils ein Ablagebereich $A_A$, $A_K$, $A_S$ für sämtliche der Anoden 2a, der Kathoden 2b und der Separatoren 3 vorgesehen sein, innerhalb derer die Kanten dieser verschiedenen Arten der Batterieelementschichten aller Batterieelemente liegen sollen. Zusätzlich dazu ist für jede der verschiedenen Arten der Batterieelementschichten die optimale Lage $S_A$, $S_K$, $S_S$ bezüglich der jeweiligen Breite und Länge dargestellt, wobei diese optimale Lage $S_A$, $S_K$, $S_S$ jeweils mittig innerhalb des jeweiligen Ablagebereichs $A_A$, $A_K$, $A_S$ verläuft. Die Breiten der Ablagebereiche $A_A$, $A_K$, $A_S$ können beispielsweise jeweils 1,0 mm beziehungsweise ±0,5 mm beidseitig der jeweiligen optimalen Lage $S_A$, $S_K$, $S_S$ betragen.

Zusätzlich zu den verschiedenen Ablagebereichen $A_A$, $A_K$, $A_S$ für die unterschiedlichen Arten der Batterieelementschichten aller Batterieelemente eines Batterieelementestapels 1 kann als Vorgabe für eine ausreichend genaue Stapelung zudem ein minimaler Abstand $d_{AK}$, $d_{AS}$ zwischen den verschiedenen Ablagebereichen $A_A$, $A_K$, $A_S$ vorgesehen sein. Der minimale Abstand $d_{AK}$ zwischen dem Ablagebereich $A_A$ für die Anoden 2a und dem Ablagebereich AK für die Kathoden 2b sowie der minimale Abstand $d_{AS}$ zwischen dem Ablagebereich $A_A$ für die Anoden 2a und dem Ablagebereich $A_S$ für die Separatoren 3 kann beispielsweise jeweils 0,8 mm betragen. Über die Kette, die diese beiden minimalen Abstände $d_{AK}$, $d_{AS}$ sowie die Breite des Ablagebereichs $A_A$ für die Anoden 2a umfasst, ergibt sich damit auch ein minimaler Abstand zwischen dem Ablagebereich $A_K$ für die Kathoden 2b und dem Ablagebereich $A_S$ für die Separatoren 3.

Das erfindungsgemäße Verfahren ermöglicht durch eine Kombination von zwei Prüfschritten eine möglichst einfache und schnelle Prüfung des Batterieelementestapels 1 hinsichtlich ausreichend genauer Lagen aller Batterieelementschichten des Batterieelementestapels 1.

In einem ersten Prüfschritt werden die Lagen der Batterieelementschichten der noch vereinzelten Batterieelemente ermittelt und dabei geprüft, ob sämtliche der Kanten der unterschiedlichen Arten der Batterieelementschichten jeweils innerhalb eines ersten Toleranzbereichs liegen. Diese verschiedenen ersten Toleranzbereiche für die verschiedenen Arten der Batterieelementschichten können den in der Fig. 3 dargestellten Ablagebereichen $A_A$, $A_K$, $A_S$ entsprechen. Diejenigen Batterieelemente, für die diese Vorgabe erfüllt ist, werden als für die Ausbildung eines Batterieelementestapels 1 geeignet und damit als verwendbar deklariert.

Die vereinzelten Batterieelemente umfassen jeweils eine Anode 2a, eine Kathode 2b und einen ersten Separator 3, der zwischen der Anode 2a und der Kathode 2b angeordnet ist. Vorzugsweise umfasst jedes der vereinzelten Batterieelemente zusätzlich noch einen zweiten Separator 3, der an der von dem ersten Separator 3 abgewandten Seite der Kathode 2b oder, vorzugsweise, der Anode 2a angeordnet ist. Durch die Integration eines solchen zweiten Separators 3 in die einzelnen Batterieelemente kann deren Stapelung zu dem Batterieelementestapel 1, die als Verfahrensschritt dem ersten Prüfschritt nachfolgt, vereinfacht werden, weil dadurch die Batterieelemente direkt aufeinander gestapelt werden können, ohne zusätzlich noch zwischen den zuvor vereinzelten Batterieelementen einen Separator 3 einfügen zu müssen.

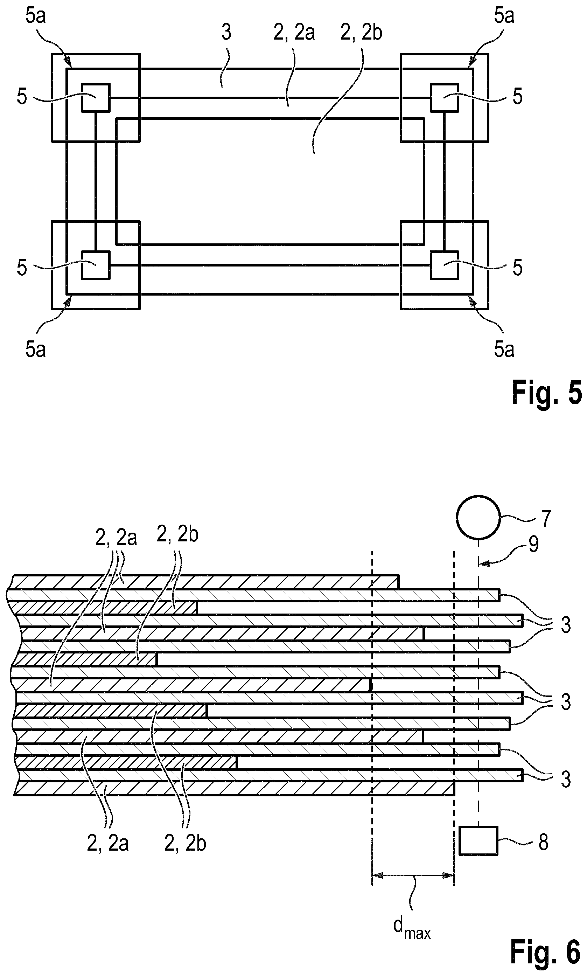

Der erste Prüfschritt wird unter Verwendung eines optischen Kamerasystems (vgl. Fig. 4 und 5) durchgeführt, mittels dessen jeweils mindestens ein Bild der vereinzelten Batterieelemente aufgenommen und ausgewertet wird. Eine erste Lichtquelle (nicht dargestellt) kann dabei vorzugsweise auf derselben Seite bezüglich der vereinzelten Batterieelemente wie mindestens eine Kamera 5 des Kamerasystems und eine zweite Lichtquelle (nicht dargestellt) auf der gegenüberliegenden Seite bezüglich der vereinzelten Batterieelemente angeordnet sein.

Für die Auswertung werden einerseits die unterschiedlichen Größen der verschiedenen Arten der Batterieelementschichten und zusätzlich auch deren unterschiedliche Absorptionsverhalten für sichtbares Licht ausgenutzt. Das Absorptionsverhalten der Separatoren 3 ist so gering, dass diejenige(n) Elektrode(n) 2, die von zumindest einem der Separatoren 3 überdeckt ist/sind, durch die Separatoren 3 durchscheinend erkennbar ist/sind. Vorzugsweise ist dabei vorgesehen, dass die mindestens eine Kamera 5 des Kamerasystems bei der Aufnahme des Bildes näher an der Kathode 2b als an der Anode 2a gelegen ist. Auf dem Bild ist dadurch bei dem beschriebenen Aufbau der einzelnen Batterieelemente die Kathode 2b, die das stärkste Absorptionsverhalten für sichtbares Licht aufweist, direkt erkennbar und die Anode 2a, die ein mittleres Absorptionsverhalten für sichtbares Licht aufweist, durch den ersten Separator 3 durchscheinend erkennbar. Dabei sind die entsprechenden Großflächen der verschiedenen Arten der Batterieelementschichten durch unterschiedliche Dunkelfärbungen in dem Bild erkennbar und dadurch für eine Auswertevorrichtung 6 des Kamerasystems automatisch auswertbar.

Sofern der Erfassungsbereich 5a der mindestens einen verwendeten Kamera 5 groß genug ist, können die vereinzelten Batterieelemente auch ohne Relativbewegung zu dieser Kamera 5 vollständig erfasst werden. Zur Realisierung einer relativ großen Auflösung kann aber auch vorgesehen sein, die vereinzelten Batterieelemente und die mindestens eine Kamera 5 relativ zueinander zu bewegen, wobei von der mindestens einen Kamera 5 jeweils nur Abschnitte der Batterieelemente erfasst werden. Eine relativ große Auflösung ohne Relativbewegung kann bei einer Verwendung mehrerer Kameras 5, die dann jeweils einen Erfassungsbereich 5a aufweisen können, der kleiner als die Großflächen der Batterieelementschichten ist, erreicht werden. Fig. 5 zeigt diesbezüglich ein Ausführungsbeispiel, bei dem jeweils eine Kamera 5 jeder der vier Ecken der vereinzelten Batterieelemente zugeordnet ist.

Nach der Prüfung der vereinzelten Batterieelemente in dem ersten Prüfschritt werden die als verwendbar deklarierten Batterieelemente in einer definierten Anzahl und optional in einer nachvollzogenen Reihenfolge zu dem Batterieelementestapel 1 gestapelt. Um zu vermeiden, dass sich dabei die Batterieelementschichten der einzelnen Batterieelemente zueinander verschieben, wodurch das Ergebnis des ersten Prüfschritts verfälscht werden könnte, kann vorzugsweise vorgesehen sein, dass die Batterieelementschichten der zuvor vereinzelten Batterieelemente bereits während der Durchführung des ersten Prüfschritts unbeweglich miteinander verbunden, insbesondere verklebt sind.

Anschließend erfolgt ein zweiter Prüfschritt, bei dem der Batterieelementestapel 1 mittels Röntgenstrahlung bestrahlt wird, die von einem Röntgenstrahler 7 ausgestrahlten von einem Röntgendetektor 8 detektiert wird (vgl. Fig. 6). Dabei ist vorgesehen, dass die Röntgenstrahlung senkrecht bezüglich der Großflächen der Batterieelementschichten ausgerichtet ist, wobei sich die senkrechte Ausrichtung auf einen Zentralstrahl 9 der grundsätzlich konischen beziehungsweise kegelförmigen Röntgenstrahlung bezieht. Durch eine Auswertung der mittels des Röntgendetektors 8 detektierten Röntgenstrahlung werden die Lagen derjenigen (mindestens drei) Kanten von einer Art der Batterieelementschichten, im vorliegenden Fall der Anoden 2a, ermittelt, die mindestens zwei der Ecken dieser Batterieelementschichten (Anoden 2a) begrenzen. Vorzugsweise ist vorgesehen, dass die Lagen von allen vier Kanten (zumindest abschnittsweise) bezüglich zumindest zwei diagonal gegenüberliegenden Ecken der Batterieelementschichten ermittelt werden. Darauf basierend wird der größte Abstand $d_{max}$, der zwischen den entsprechenden (d.h. gleichgelegenen) Kanten aller Anoden 2a vorliegt, bestimmt (vgl. Fig. 6) und zudem geprüft, ob dieser jeweilige

größte Abstand $d_{max}$ innerhalb eines zweiten Toleranzbereichs $T_2$ liegt. Aufgrund einer vorteilhaften Auswertbarkeit nur durch den Zentralstrahl 9 der Röntgenstrahlung ist vorgesehen, dass der Batterieelementestapel 1 für die Erfassung der Kanten relativ zu der Röntgenstrahlung bewegt wird. Die Bewegung und die einzelnen Bildaufnahmen sollten dabei synchronisiert werden, so dass ein verzerrungsfreies Bild mit den Aufnahmen des Röntgendetektors 8 zusammengesetzt werden kann.

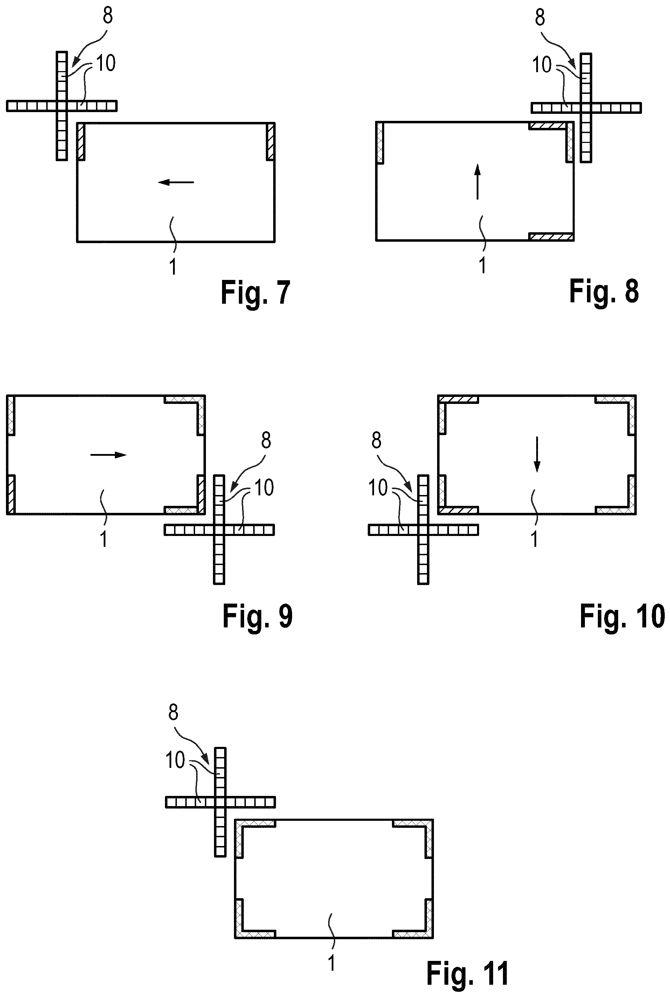

Die Fig. 7 bis 11 verdeutlichen dieses Vorgehen. Gemäß den Fig. 7 bis 11 wird der Batterieelementestapel 1 gezielt durch linienförmige Erfassungsbereiche von zwei Zeilendetektoren 10, die in Kombination den Röntgendetektor 8 darstellen, bewegt. Durch die Bewegung des Batterieelementestapels 1 durch die Erfassungsbereiche der Zeilendetektoren 10 wird ein flächiger Erfassungsbereich erhalten. Die Zeilendetektoren 10 sind dabei senkrecht zueinander und kreuzförmig angeordnet. Die Bewegung des Batterieelementestapels 1 ist jeweils senkrecht bezüglich des Erfassungsbereichs von einem der Zeilendetektoren 10 ausgerichtet.

Anstelle von Zeilendetektoren 10 kann auch ein Flächendetektor (nicht dargestellt) oder es können mehrere Flächendetektoren zum Einsatz kommen.

Ermittelt werden die Lagen von allen vier Kanten sämtlicher der Anoden 2a. Dabei ist es nicht erforderlich, die Kanten über ihrer gesamten Länge zu erfassen. Die Erfassung eines möglichst großen Abschnitts davon kann sich jedoch vorteilhaft hinsichtlich des Ermittlungsergebnisses auswirken, so dass beispielsweise gemäß den Fig. 7 und 11 nacheinander zwei unterschiedliche Abschnitte der in den Längsrichtungen verlaufenden Kanten ermittelt und die diesbezüglichen Teilergebnisse miteinander zur Ermittlung eines einzelnen Kantenverlaufs verknüpft werden.

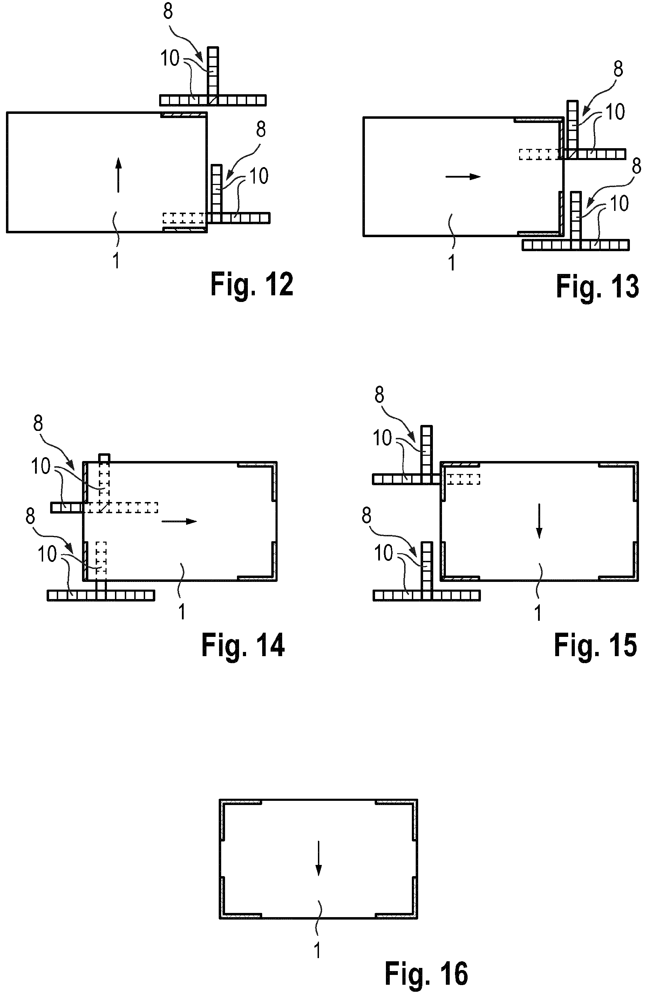

Die Fig. 12 bis 16 zeigen vergleichbar zu den Fig. 7 bis 11 eine Erfassung der vier Kanten (abschnittsweise) der Anoden 2a, wobei in diesem Fall zwei Röntgendetektoren 8 aus je zwei Zeilendetektoren 10, die T-förmig angeordnet sind, zum Einsatz kommen. Diese zwei Röntgendetektoren 8 können mit jeweils einem Röntgenstrahler (nicht dargestellt) kombiniert sein, wobei ein Zentralstrahl einer von dem jeweiligen Röntgenstrahler ausgestrahlten Röntgenstrahlung im Schnittpunkt der T-förmigen Anordnung der jeweils zwei Zeilendetektoren 10 angeordnet sein kann. Grundsätzlich es auch möglich, nur einen T-förmigen Röntgendetektor 8 und damit auch nur einen zugeordneten Röntgenstrahler gemäß den Fig. 12 bis 16 einzusetzen.

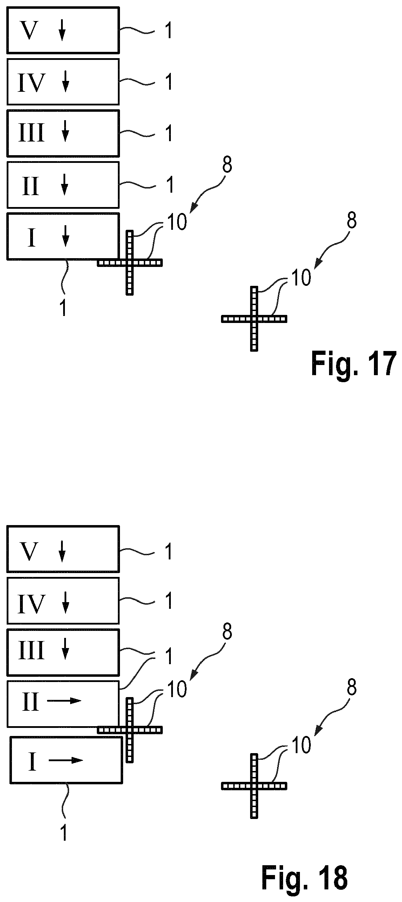

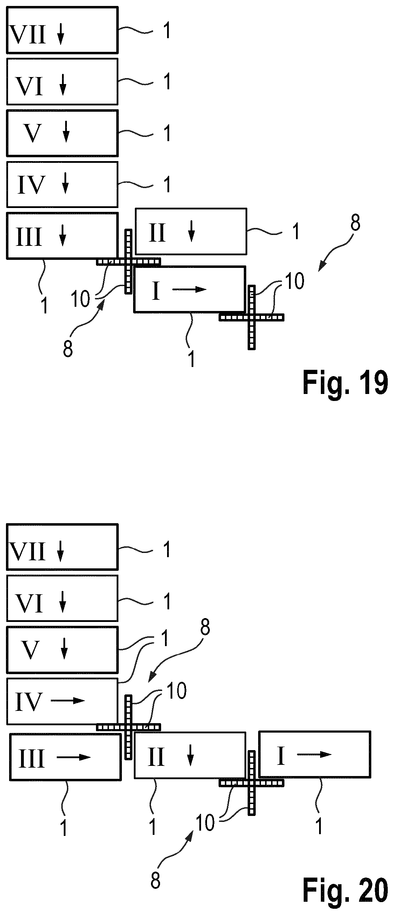

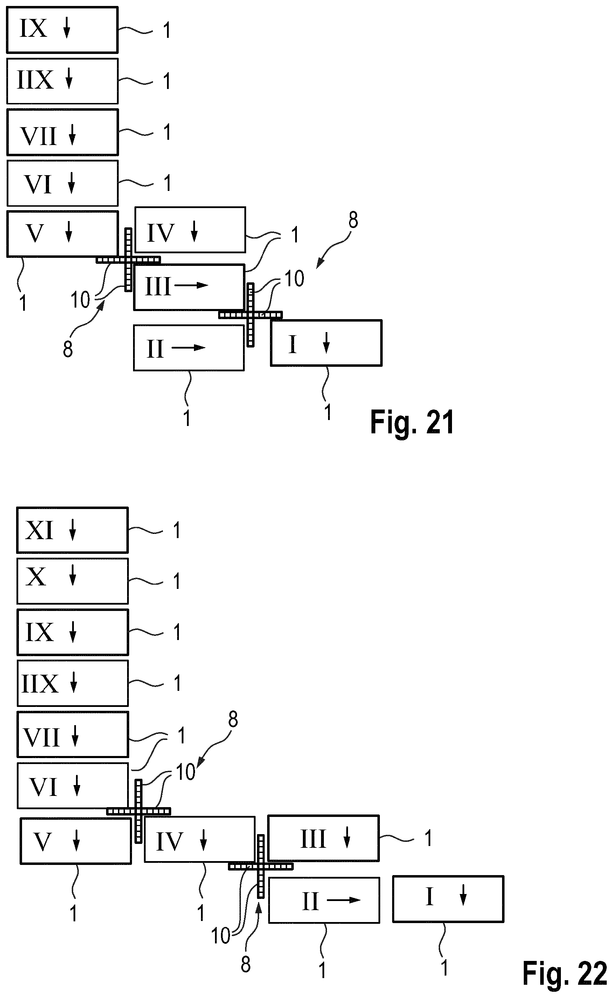

Die Fig. 17 bis 22 zeigen wiederum vergleichbar zu den Fig. 7 bis 11 eine Erfassung der Kanten (abschnittsweise) der Anoden 2a, wobei in diesem Fall mittels zwei Röntgendetektoren 8, die jeweils kreuzweise angeordnete Zeilendetektoren 10 umfassen, jeweils zwei aus einer Mehrzahl (insgesamt fünf sind dargestellt) von Batterieelementestapeln 1 gleichzeitig erfasst werden. Für ein besseres Verständnis der Bewegungen der einzelnen Batterieelementestapel 1 sind diese mit I - V nummeriert.

Zwei Zeilendetektoren 10 eines Röntgendetektors 8 können auch L-förmig angeordnet sein.

Wenn zwischen zwei Erfassungen von Kanten eine Drehung des Batterieelementestapels durchgeführt wird, kann das Verfahren auch mit einem einzelnen Zeilendetektor 10 durchgeführt werden.

Die Zeilendetektoren können auch so lang ausgestaltet sein, dass diese in einem Durchgang die gesamte Länge einer Kante erfassen kann.

Auch kann eine punktförmige Erfassung ausreichend sein. Dies gilt zumindest dann, wenn je Kante mindestens zwei punktförmige Erfassung durchgeführt werden.

Eine Unterscheidung der Kanten der verschiedenen Arten von Batterieelementschichten bei der Auswertung der von dem Röntgendetektor 8 detektierten Röntgenstrahlung basiert wiederum auf unterschiedlichen Absorptionsverhalten, die die verschiedenen Arten von Batterieelementschichten aufgrund unterschiedlicher Materialien, aus denen diese ausgebildet sind, auch für die Röntgenstrahlung haben. Dabei kann insbesondere vorgesehen sein, dass die Röntgenstrahlung von den Separatoren 3 im Wesentlichen nicht, von den Anoden 2a in einem mittleren Ausmaß und von den Kathoden 2b in einem relativ hohen Ausmaß absorbiert wird. Dadurch wird vorteilhaft ermöglicht, jeweils den größten Abstand, der zwischen den verschiedenen betrachteten (gleichgelegenen) Kanten von allen Anoden 2a ausgebildet ist, zu ermitteln. Dabei werden unterschiedliche Dunkelwerte in einem Bereich, in dem diese Kanten liegen, ausgewertet, wobei durch die nur teilweise aber gleichzeitig ausreichend hohe Absorption der Röntgenstrahlung durch die Anoden 2a die Lagen der betrachteten Kanten sämtlicher Anoden 2a ermittelt werden kann, da zwischen diesen eindeutig unterschieden werden kann. Dies gilt nur dann nicht, wenn zwei oder mehr Kanten exakt und direkt übereinander liegen. Folglich können auch die Lagen von denjenigen zwei Kanten, die den größten Abstand $d_{max}$ zueinander aufweisen und damit dieser Abstand $d_{max}$ selbst ermittelt werden (vgl. Fig. 6). Diese Ermittlung bezüglich der Kanten der Anoden 2a wird durch die relativ stark absorbierenden Kathoden 2b aufgrund ihrer relativ (im Vergleich zu den Anoden 2a) geringen Größe ihrer Großflächen nicht verhindert. Dasselbe gilt für die Separatoren 3, deren Großflächen zwar größer als diejenigen der Anoden 2a sind, die jedoch zugleich die Röntgenstrahlung im Wesentlichen nicht absorbieren und damit nicht verhindern, dass die Kanten der Anoden 2a infolge ausreichend klar erkennbarer, sprunghafter Änderungen in der Absorption der detektierten Röntgenstrahlung erkannt werden können.

Zusätzlich kann durch den Abstand von zwei gegenüberliegenden Kanten der den Abstand $d_{max}$ aufweisenden Anodenkanten die Länge oder die Breite der zugehörigen Anoden 2a ermittelt werden. Werden diese Werte ebenfalls während des ersten Prüfschritts aufgenommen, kann ein Vergleichen zu einer eindeutigen Zuordnung zu einem oder mehrerer Anoden 2a in dem Batterieelementestapel 1 führen.

Die maximal verschobene Kathode kann ebenfalls mit einem hohen Kontrast ermittelt werden, so dass eine direkte Prüfung des Mindestabstands zwischen Anode und Kathode erfolgen kann.

Der zweite Toleranzbereich $T_2$ wird für jede der betrachteten Kanten ermittelt, indem ein definierter Ausgangstoleranzbereich $T_A$ basierend auf einem in dem ersten Prüfschritt ermittelten Abstand der gleich gelegenen Kanten der Batterieelementschichten angepasst wird.

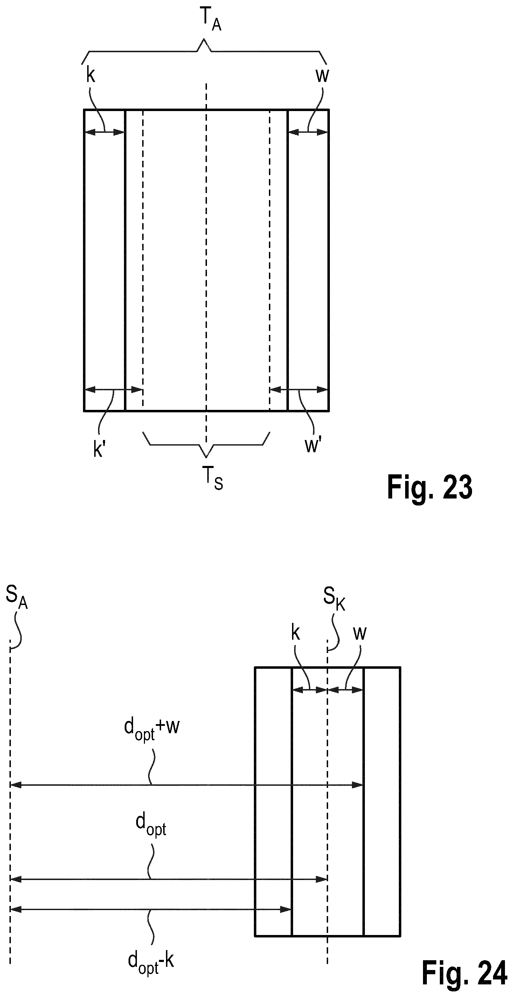

Die Fig. 23 zeigt den Ausgangstoleranzbereich $T_A$ bezüglich einer der betrachteten Kanten der Anoden 2a, wobei dieser ein Abschnitt (mit unveränderter Breite) des Ablagebereichs $A_A$ für die Anoden 2a gemäß der Fig. 4 ist. Der zweite Toleranzbereich $T_2$ liegt innerhalb des Ausgangstoleranzbereichs $T_A$, ist randseitig jedoch um jeweils eine Abweichung k, w kleiner. Diese Abweichungen k, w wurden in dem ersten Prüfschritt ermittelt und stellen die jeweils für alle verwendbaren Batterieelemente eines Batterieelementestapels 1 ermittelte größte Abweichung zwischen den tatsächlichen Abständen der Kanten der Kathode 2b und der Anode 2a der Batterieelemente von dem optimalen Abstand (d.h. dem Abstand zwischen den optimalen Lagen $S_A$, $S_K$ der Kanten der Kathode 2b und der Anode 2a) $d_{opt}$ in den verschiedenen Richtungen (k: näher zueinander; w: weiter voneinander) dar (vgl. Fig. 24). Eine entsprechende Anpassung des Ausgangstoleranzbereichs $T_A$ zur Ermittlung des zweiten Toleranzbereichs $T_2$ kann zusätzlich unter Verwendung der jeweils für alle verwendbaren Batterieelemente eines Batterieelementestapels 1 ermittelten größten Abweichung zwischen den tatsächlichen Abständen der Kanten des mindestens einen Separators 3 und der Anode 2a der Batterieelemente von dem optimalen Abstand in den verschiedenen Richtungen erfolgen. Damit können Abweichungen k' und w' ermittelt werden, die den Ausgangstoleranzbereich $T_A$ ebenfalls randseitig verkleinern. Die jeweils größte der Verkleinerungen k und k' einerseits und w und w' andererseits bestimmen dann die Grenzen des zweiten Toleranzbereichs $T_2$.

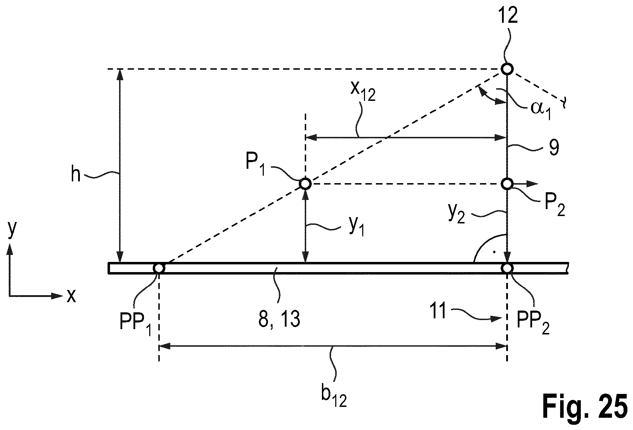

Die Fig. 25 zeigt, wie unter Ausnutzung des Effekts der Parallaxe im Rahmen des zweiten Prüfschritts die Höhen der betrachteten Kanten der Anoden 2a innerhalb des Batterieelementestapels 1 ermittelt werden können. Eine Kante, die bei exakt seitlicher Ansicht als Punkt erkennbar ist, wird an einer ersten Position $P_1$ und an einer durch eine Zentralstrahlebene 11 definierten zweiten Position $P_2$ auf den Erfassungsbereich des Röntgendetektors 8 projiziert, woraus die Projektionslinien $PP_1$ und $PP_2$ ermittelt werden. Ein (Bezugs-)Koordinatensystem liegt dabei bevorzugt in $PP_2$, wobei die Projektionslinien in z-Richtung und senkrecht zur x-Richtung verlaufen. Durch die bekannte Anordnung des Röntgendetektors 8 relativ zu dem Fokuspunkt 12 des Röntgenstrahlers 7 und durch die Kenntnis der Bewegungsgeschwindigkeit der Kante in ausschließlich der x-Richtung sind h, $x_{12}$, $b_{12}$ und damit auch der Öffnungswinkel $\alpha_1$ in der yx-Ebene bekannt. Mit diesen bekannten Größen kann mit der Formel

$$y_1 = y_2 = h * \left(1 - \frac{x_{12}}{b_{12}}\right)$$

der direkte Abstand ($y_1$, $y_2$) der Kante von dem Erfassungsbereich des Röntgendetektors 8 (in y-Richtung des Koordinatensystems) ermittelt werden. Dabei kann annähernd davon ausgegangen werden, dass sich dieser Abstand nicht ändert ($y_1 \approx y_2$).

Alternativ zu der Verwendung eines Flächendetektors 13 gemäß der Fig. 25 können auch zumindest zwei Zeilendetektoren 10 eingesetzt werden, um die mindestens zweifache Ermittlung der räumlichen Lage der betrachteten Kante zu ermöglichen.

Bezugszeichenliste

| 1 | Batterieelementestapel / Elektroden-Separator-Verbund (ESV) |
|---|---|
| 2 | Elektrode |
| 2a | Anode |
| 2b | Kathode |
| 3 | Separator |
| 4 | Werkstückträger |
| 4a | Deckel des Werkstückträgers |
| 4b | Boden des Werkstückträgers |
| 5 | Kamera |
| 5a | Erfassungsbereich der Kamera |
| 6 | Auswertevorrichtung |
| 7 | Röntgenstrahler |
| 8 | Röntgendetektor |
| 9 | Zentralstrahl der Röntgenstrahlung |
| 10 | Zeilendetektor |
| 11 | Zentralstrahlebene |
| 12 | Fokuspunkt des Röntgenstrahlers |
| 13 | Flächendetektor |
| $A_A$ | Ablagebereich für die Anoden |
| $A_K$ | Ablagebereich für die Kathoden |
| $A_S$ | Ablagebereich für die Separatoren |
| $S_A$ | optimale Lage einer Kante einer Anode |
| $S_K$ | optimale Lage einer Kante einer Kathode |
| $S_S$ | optimale Lage einer Kante eines Separators |
| $d_{AK}$ | minimaler Abstand zwischen den Kanten einer Anode und einer Kathode eines Batterieelements |
| $d_{AS}$ | minimaler Abstand zwischen den Kanten einer Anode und eines Separators eines Batterieelements |
| $d_{max}$ | größter Abstand zwischen gleich gelegenen Kanten aller Anoden |
| $d_{opt}$ | Abstand zwischen den optimalen Lagen der Kanten der Kathode und der Anode der Batterieelemente |
| $T_2$ | zweiter Toleranzbereich |
| $T_A$ | Ausgangstoleranzbereich |
| k | größte aufeinander zu gerichtete Abweichung der Abstände der Kanten der Anoden und Kathoden |
| w | größte voneinander weg gerichtete Abweichung der Abstände der Kanten der Anoden und Kathoden |
| k' | größte aufeinander zu gerichtete Abweichung der Abstände der Kanten der Anoden und Separatoren |
| w | größte voneinander weg gerichtete Abweichung der Abstände der Kanten der Anoden und Separatoren |
| h | Abstand des Fokuspunkts des Röntgenstrahlers zum Erfassungsbereich des Röntgendetektors |
| $P_1$ | erste Position einer Kante |
| $P_2$ | zweite Position der Kante |
| $PP_1$ | Projektionslinie zu P1 |
| $PP_2$ | Projektionslinie zu P2 |
| $x_{12}$ | Distanz zwischen P1 und P2 |
| $b_{12}$ | Distanz zwischen PP1 und PP2 |
| $y_1$ | Abstand der Kante zum Erfassungsbereich des Röntgendetektors in P1 |
| $y_2$ | Abstand der Kante zum Erfassungsbereich des Röntgendetektors in P2 |
| $\alpha_1$ | Öffnungswinkel |

**Patentansprüche**

1. Verfahren zur Prüfung mindestens eines Stapels (1) mehrerer Batterieelemente, die jeweils eine als Anode (2a) ausgestaltete Elektrode (2), eine als Kathode (2b) ausgestaltete Elektrode (2) und mindestens einen Separator (3) als unterschiedliche Arten von plattenförmigen Batterieelementschichten umfassen, wobei der Separator (3) zwischen den Elektroden (2) angeordnet ist und wobei die Batterieelementschichten polygone Großflächen mit zumindest teilweise unterschiedlichen Größen aufweisen und in einer Stapelrichtung, die senkrecht zu den Großflächen ausgerichtet ist, gestapelt sind, wobei

• in einem ersten Prüfschritt die Lagen der Batterieelementschichten der noch vereinzelten Batterieelemente ermittelt und dabei geprüft wird, ob Kanten der Batterieelementschichten jeweils innerhalb eines ersten Toleranzbereichs liegen, wobei die Batterieelemente, für die das gilt, als verwendbare Batterieelemente ermittelt werden,
• mehrere der verwendbaren Batterieelemente zu dem Batterieelementestapel (1) gestapelt werden,
• in einem zweiten Prüfschritt der Batterieelementestapel (1) mittels Röntgenstrahlung bestrahlt wird, die von einem Röntgenstrahler (7) ausgestrahlt und von einem Röntgendetektor (8) detektiert wird, wobei die Röntgenstrahlung senkrecht bezüglich der Großflächen der Batterieelementschichten ausgerichtet ist, und mittels der detektierten Röntgenstrahlung die Lagen derjenigen Kanten von einer Art der Batterieelementschichten ermittelt werden, die mindestens zwei der Ecken dieser Batterieelementschichten begrenzen, wobei geprüft wird, ob jeweils der größte Abstand, der zwischen den jeweils gleich gelegenen Kanten von allen der Batterieelementschichten der ausgewählten Art vorliegt, innerhalb eines zweiten Toleranzbereichs ($T_2$) liegt.

2. Verfahren gemäß Anspruch 1, **dadurch gekennzeichnet, dass** die Batterieelementschichten unbeweglich miteinander verbunden sind.

3. Verfahren gemäß Anspruch 1 oder 2, **dadurch gekennzeichnet, dass** die Großflächen der Anoden (2a) größer als die Großflächen der Kathoden (2b) sind.

4. Verfahren gemäß einem der vorhergehenden Ansprüche, **dadurch gekennzeichnet, dass** die Großflächen der Separatoren (3) größer als die Großflächen der Kathoden (2b) und/oder der Anoden (2a) sind.

5. Verfahren gemäß einem der vorhergehenden Ansprüche, **dadurch gekennzeichnet, dass** die Lagen der Kanten der Anoden (2a) ermittelt werden.

6. Verfahren gemäß einem der vorhergehenden Ansprüche, **dadurch gekennzeichnet, dass** das Ermitteln der Lagen der Batterieelementschichten der vereinzelten Batterieelemente basierend auf dem Bild eines optischen Kamerasystems erfolgt.

7. Verfahren gemäß Anspruch 6, **dadurch gekennzeichnet, dass** das Bild des Kamerasystems im Auflicht aufgenommen wird.

8. Verfahren gemäß Anspruch 5, **dadurch gekennzeichnet, dass** bei der Aufnahme des Bildes die Kathode (2b) näher an einer Kamera (5) des Kamerasystems liegt als die Anode (2a).

9. Verfahren gemäß einem der vorhergehenden Ansprüche, **dadurch gekennzeichnet, dass** der zweite Toleranzbereich ($T_2$) jeweils ermittelt wird, indem ein definierter Ausgangstoleranzbereich ($T_A$) basierend auf einem in dem ersten Prüfschritt ermittelten Abstand der entsprechenden Kanten angepasst wird.

10. Verfahren gemäß einem der vorhergehenden Ansprüche, **dadurch gekennzeichnet, dass** der Röntgendetektor (8) mindestens zwei Zeilendetektoren (10) umfasst, die senkrecht zueinander ausgerichtet sind.

11. Verfahren gemäß Anspruch 10, **dadurch gekennzeichnet, dass** der Batterieelementestapel (1) mindestens einmal in senkrechter Richtung durch einen zeilenförmigen Erfassungsbereich jedes der Zeilendetektoren (10) relativbewegt wird.

12. Verfahren gemäß einem der vorhergehenden Ansprüche, **dadurch gekennzeichnet, dass** die mehreren verwendbaren Batterieelemente zu mindestens zwei Batterieelementestapeln (1) gestapelt werden, die in dem zweiten Prüfschritt gleichzeitig mittels der Röntgenstrahlung bestrahlt werden.

13. Verfahren gemäß einem der vorhergehenden Ansprüche, **dadurch gekennzeichnet, dass**

   • die mehreren verwendbaren Batterieelemente in einer nachvollzogenen Reihenfolge zu dem mindestens einen Batterieelementestapel (1) gestapelt werden und
   • der zweite Prüfschritt mindestens zweifach in unterschiedlichen Positionen des Batterieelementestapels (1) relativ zu dem Röntgenstrahler durchgeführt wird und durch einen Vergleich der Ergebnisse dieser mindestens zwei zweiten Prüfschritte die ermittelten Lagen der Kanten den verschiedenen Batterieelementen zugeordnet werden.

**Claims**

1. Method for checking at least one stack (1) of several battery elements which each comprise an electrode (2) designed as an anode (2a), an electrode (2) designed as a cathode (2b) and at least one separator (3) as different types of plate-like battery element layers, wherein the separator (3) is arranged between the electrodes (2) and wherein the battery element layers have large polygonal surfaces of at least partly different sizes and are stacked in a stacking direction which is oriented perpendicularly to the large surfaces, wherein

   • in a first checking step, the positions of the battery element layers of the still separated battery elements are determined and in the process a check is made as to whether edges of the battery element layers each lie within a first tolerance range, wherein the battery elements to which this applies are determined to be usable battery elements,

- several of the usable battery elements are stacked to form the battery element stack (1),
- in a second checking step, the battery element stack (1) is irradiated by means of X-ray radiation which is emitted by an X-ray radiator (7) and detected by an **X**-ray detector (8), wherein the X-ray radiation is oriented perpendicularly with respect to the large surfaces of the battery element layers, and the positions of those edges of one type of battery element layers which delimit at least two of the corners of these battery element layers are determined by means of the detected X-ray radiation, wherein a check is made as to whether the greatest distance between the respectively aligned edges of all of the battery element layers of the selected type lies within a second tolerance range ($T_2$).

2. Method according to Claim 1, **characterized in that** the battery element layers are immovably connected to each other.

3. Method according to Claim 1 or 2, **characterized in that** the large surfaces of the anodes (2a) are larger than the large surfaces of the cathodes (2b).

4. Method according to any of the preceding claims, **characterized in that** the large surfaces of the separators (3) are larger than the large surfaces of the cathodes (2b) and/or the anodes (2a).

5. Method according to any of the preceding claims, **characterized in that** the positions of the edges of the anodes (2a) are determined.

6. Method according to any of the preceding claims, **characterized in that** the positions of the battery element layers of the separated battery elements are determined based on the image from an optical camera system.

7. Method according to Claim 6, **characterized in that** the image from the camera system is captured in incident light.

8. Method according to Claim 5, **characterized in that**, when the image is captured, the cathode (2b) is closer to a camera (5) of the camera system than the anode (2a).

9. Method according to any of the preceding claims, **characterized in that** the second tolerance range ($T_2$) is determined in each case by way of a defined output tolerance range ($T_A$) being adapted based on a distance between the corresponding edges determined in the first checking step.

10. Method according to any of the preceding claims, **characterized in that** the X-ray detector (8) comprises at least two line detectors (10), which are oriented perpendicularly to each other.

11. Method according to Claim 10, **characterized in that** the battery element stack (1) is moved in a relative manner at least once in a vertical direction through a cell-like detection region of each of the line detectors (10).

12. Method according to any of the preceding claims, **characterized in that** the several usable battery elements are stacked to form at least two battery element stacks (1), which are simultaneously irradiated by means of the X-ray radiation in the second checking step.

13. Method according to any of the preceding claims, **characterized in that**

- the several usable battery elements are stacked in a reconstructed order to form the at least one battery element stack (1) and
- the second checking step is carried out at least twice in different positions of the battery element stack (1) relative to the X-ray radiator and, by comparing the results of these at least two second checking steps, the determined positions of the edges are assigned to the various battery elements.

**Revendications**

1. Procédé de contrôle d'au moins une pile (1) de plusieurs éléments de batterie, qui comprennent chacun une électrode (2) conçue comme anode (2a), une électrode (2) conçue comme cathode (2b) et au moins un séparateur (3) en tant que différents types de couches d'éléments de batterie en forme de plaques, le séparateur (3) étant agencé entre les électrodes (2) et les couches d'éléments de batterie présentant de grandes surfaces polygonales de tailles au moins partiellement différentes et étant empilées dans une direction d'empilement qui est orientée perpendiculairement aux grandes surfaces,

- dans une première étape de contrôle, les positions des couches d'éléments de batterie des éléments de batterie encore séparés étant déterminées et il étant vérifié alors si les bords des couches d'éléments de batterie se trouvent respectivement à l'intérieur d'une première plage de tolérance, les éléments de batterie pour lesquels cela est valable étant déterminés comme éléments de batterie utilisables,
- plusieurs des éléments de batterie utilisables étant empilés pour former la pile d'éléments de batterie (1),

• dans une deuxième étape de contrôle, la pile d'éléments de batterie (1) étant exposée à un faisceau de rayons X qui sont émis par un émetteur de rayons X (7) et détectés par un détecteur de rayons X (8), le faisceau de rayons X étant orienté perpendiculairement par rapport aux grandes surfaces des couches d'éléments de batterie, et au moyen du faisceau de rayons X détecté, les positions des bords d'un type des couches d'éléments de batterie qui délimitent au moins deux des coins de ces couches d'éléments de batterie étant déterminées, il étant vérifié si la plus grande distance qui existe entre les bords situés respectivement de la même manière de toutes les couches d'éléments de batterie du type sélectionné se situe à l'intérieur d'une deuxième plage de tolérance ($T_2$) .

2. Procédé selon la revendication 1, **caractérisé en ce que** les couches d'éléments de batterie sont reliées entre elles de manière immobile.

3. Procédé selon la revendication 1 ou 2, **caractérisé en ce que** les grandes surfaces des anodes (2a) sont plus grandes que les grandes surfaces des cathodes (2b).

4. Procédé selon l'une quelconque des revendications précédentes, **caractérisé en ce que** les grandes surfaces des séparateurs (3) sont plus grandes que les grandes surfaces des cathodes (2b) et/ou des anodes (2a).

5. Procédé selon l'une quelconque des revendications précédentes, **caractérisé en ce que** les positions des bords des anodes (2a) sont déterminées.

6. Procédé selon l'une quelconque des revendications précédentes, **caractérisé en ce que** la détermination des positions des couches d'éléments de batterie des éléments de batterie séparés est effectuée sur la base de l'image d'un système de caméra optique.

7. Procédé selon la revendication 6, **caractérisé en ce que** l'image du système de caméra est prise en lumière incidente.

8. Procédé selon la revendication 5, **caractérisé en ce que**, lors de la prise de l'image, la cathode (2b) est plus proche d'une caméra (5) du système de caméra que l'anode (2a).

9. Procédé selon l'une quelconque des revendications précédentes, **caractérisé en ce que** la deuxième plage de tolérance ($T_2$) est respectivement déterminée en adaptant une plage de tolérance initiale définie ($T_A$) sur la base d'une distance des bords correspondants déterminée lors de la première étape de contrôle.

10. Procédé selon l'une quelconque des revendications précédentes, **caractérisé en ce que** le détecteur de rayons X (8) comprend au moins deux détecteurs linéaires (10) orientés perpendiculairement l'un à l'autre.

11. Procédé selon la revendication 10, **caractérisé en ce que** la pile d'éléments de batterie (1) est déplacée relativement au moins une fois dans une direction verticale à travers une zone de détection en forme de cellule de chacun des détecteurs linéaires (10).

12. Procédé selon l'une quelconque des revendications précédentes, **caractérisé en ce que** les plusieurs éléments de batterie utilisables sont empilés en au moins deux piles d'éléments de batterie (1) qui sont exposées simultanément au moyen du faisceau de rayons X lors de la deuxième étape de contrôle.

13. Procédé selon l'une quelconque des revendications précédentes, **caractérisé en ce que**

• les plusieurs éléments de batterie utilisables sont empilés dans un ordre séquentiel pour former l'au moins une pile d'éléments de batterie (1), et

• la deuxième étape de contrôle est effectuée au moins deux fois dans différentes positions de la pile d'éléments de batterie (1) par rapport à l'émetteur de rayons X et, par une comparaison des résultats de ces au moins deux deuxièmes étapes de contrôle, les positions déterminées des bords sont attribuées aux différents éléments de batterie.

4, 4a

1

4, 4b

**Fig. 1**

1

4, 4a

2, 2a

2, 2a

3

2, 2b

2, 2b

4, 4b

**Fig. 2**

Fig. 3

Fig. 4

Fig. 5

Fig. 6

Fig. 7

Fig. 8

Fig. 9

Fig. 10

Fig. 11

**Fig. 12**

**Fig. 13**

**Fig. 14**

**Fig. 15**

**Fig. 16**

V ↓ ~ 1

IV ↓ ~ 1

III ↓ ~ 1

II ↓ ~ 1

I ↓

1

8
10

8
10

Fig. 17

V ↓ ~ 1

IV ↓ ~ 1

III ↓ ~ 1

II →

I →

1

8
10

8
10

Fig. 18

VII ↓ —～ 1

VI ↓ —～ 1

V ↓ —～ 1

IV ↓ —～ 1

III ↓

II ↓ —～ 1

8

1

10

8

I →

10

8

1

**Fig. 19**

VII ↓ —～ 1

VI ↓ —～ 1

V ↓ —～ 1

8

IV →

10

III → 

II ↓

I →

1

1

10

1

8

**Fig. 20**

Fig. 21

Fig. 22

$T_A$

k                    w

k'        $T_S$        w'

**Fig. 23**

$S_A$                    $S_K$

k    w

$d_{opt}+w$

$d_{opt}$

$d_{opt}-k$

**Fig. 24**

Fig. 25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009018079 A1
- DE 102020112814 A1
- EP 4044306 A1
- JP 2018087740 A